# EUROPEAN PATENT APPLICATION

(11) **EP 3 298 936 A1**
(43) Date of publication of application: **28.03.2018**
(21) Application number: 15892078.5
(22) Date of filing: 18.05.2015
(51) Int. Cl.: A47J 43/07

(54) **GROUP OF STIRRING CUTTERS**

(71) Applicant: Lee, Wen-Ching, Taichung City (TW)
(72) Inventor: Lee, Wen-Ching, Taichung City (TW)
(74) Representative: Becker Kurig Straus
(86) International application number: PCT/CN2015/000338
(87) International publication number: WO 2016/183697

(57) **Abstract**

A stirring knife assembly (10) includes a knife shaft (30) and a knife assembly (50). The knife assembly (50) is connected to the knife shaft (30), and includes a first knife (51) and a second knife (53). The first knife (51) has a body (511) and five blades (512, 513, 514, 515, 516). The body (511) has an outer periphery and a horizontal surface defined by the outer periphery. The five blades (512, 513, 514, 515, 516) respectively extend outwards from the outer periphery of the body (511). The second knife (53) is disposed on the body (511) of the first knife (51). In this way, the stirring knife assembly (10) can efficiently break up food in a stirring cup.

## Description

### BACKGROUND OF THE INVENTION

### 1. Field of the Invention

The present invention relates to a stirring knife, and in particular, to a stirring knife assembly for stirring and breaking up food.

### 2. Description of Related Art

A food cooking machine, a juice extractor, and other machines generally enable a high speed rotation of a stirring knife by means of a motor, such that food in a stirring cup flows with a liquid and is repeatedly hit and cut, thereby being broken up eventually.

A common stirring knife usually has a transverse blade or four blades, but the blades of such a structure cannot efficiently break up the food in the stirring cup into fines. If the number of blades is increased to enhance the chances of breaking up food, a high density of blades will be caused, resulting in an impact on the efficiency of breaking up food.

Furthermore, the stirring knife is disposed within the stirring cup and usually slightly higher than the bottom of the stirring cup, so that the food located between the stirring knife and the bottom of the stirring cup cannot be effectively broken up.

### SUMMARY OF THE INVENTION

In view of the above defects, a stirring knife assembly of the present invention can break up food more efficiently as compared with the prior art, so as to improve the work efficiency.

In order to achieve the above objective, the stirring knife assembly of the present invention includes a knife shaft and a knife assembly. The knife assembly is connected to the knife shaft, and includes a first knife and a second knife. The first knife has a body and five blades. The body has an outer periphery and a horizontal surface defined by the outer periphery. The five blades respectively extend outwards from the outer periphery of the body. The second knife is disposed on the body of the first knife.

In this way, the stirring knife assembly of the present invention can improve the work efficiency of stirring and breaking by means of the five blades of the first knife and the second knife.

Preferably, the five blades of the first knife include a horizontal blade, two upwardly inclined blades, and two downwardly inclined blades. The horizontal blade is parallel to a horizontal surface of the body. The two upwardly inclined blades incline upwardly from the horizontal surface of the body. The two downwardly inclined blades incline downwardly from the horizontal surface of the body. In this way, the food between the body of the first knife and the bottom of the stirring cup can be broken up by means of the two downwardly inclined blades, thereby improving the work efficiency.

Preferably, the incline angles of the two upwardly inclined blades are any one from 10 degrees to 30 degrees. The incline angles of the two downwardly inclined blades are any one from minus 10 degrees to minus 30 degrees.

In this way, the stirring knife assembly of the present invention can effectively improve the work efficiency, and no interference occurs between the blades of the first knife and the second knife, such that food can be efficiently broken up.

Detailed structures, features, assembly, or use of the stirring knife assembly provided in the present invention will be described hereunder. However, those of ordinary skill in the art should understand that, the detailed description and the specific embodiments disclosed in the present invention are merely used to illustrate the present invention, but are not used to limit the scope of the present invention.

### BRIEF DESCRIPTION OF THE DRAWINGS

FIG. 1 is a perspective view of a stirring knife assembly according to an embodiment of the present invention.
FIG. 2 is an exploded view of the stirring knife assembly in FIG. 1.
FIG. 3 is a top view of a first knife in FIG. 2.
FIG. 4 is a front view of the first knife in FIG. 3.

### DETAILED DESCRIPTION OF THE PREFERRED EMBODIMENTS

Hereinafter, corresponding preferred embodiments are described with reference to the drawings to illustrate the components and effect thereof of the stirring knife assembly of the present invention. However, the components, sizes, and shapes of the stirring knife assembly in the drawings are merely used to illustrate the technical features of the present invention, but are not used to limit the present invention.

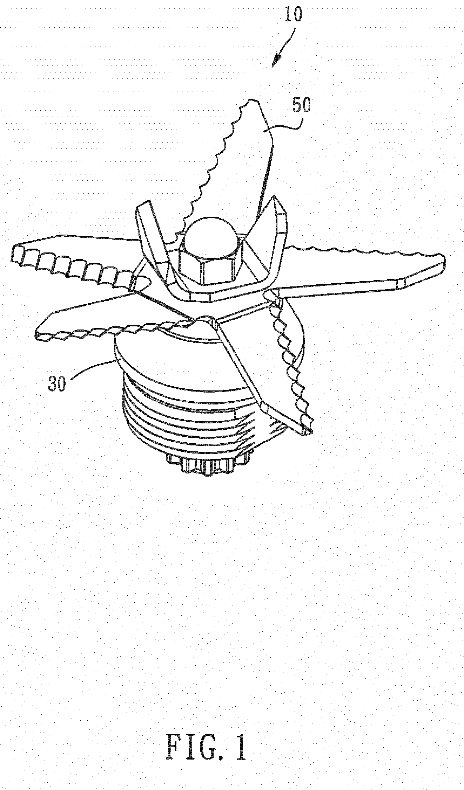

As shown in FIG. 1, the stirring knife assembly 10 of the present invention is installed in a stirring cup (not shown), and includes a knife shaft 30 and a knife assembly 50.

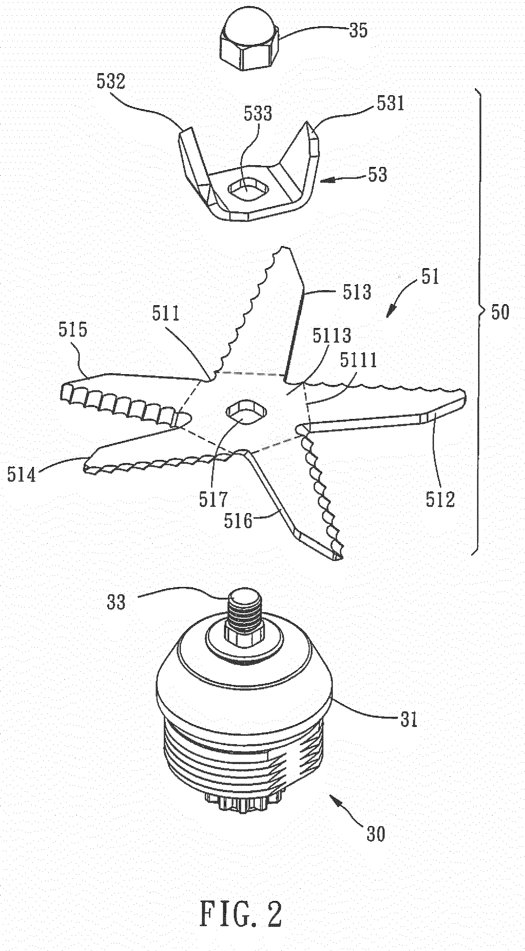

As shown in FIG. 2, the knife shaft 30 includes a housing 31, a rotating shaft 33, and a nut 35. The rotating shaft 33, passing through the housing 31, is configured to connect to a motor (not shown), and can be driven by the motor. Herein, the knife shaft 30 may also be composed of other structures, and is not limited to those described in the present embodiment.

The knife assembly 50 is connected to the knife shaft 30, and includes a first knife 51 and a second knife 53. The first knife 51 has a body 511 and five blades 512, 513, 514, 515, and 516. The body 511 has an outer periphery 5111 and a horizontal surface 5113 defined by the outer periphery 5111. In order to have a clear understanding on the scope of the body 511 defined in the present invention, in the figure, the outer periphery 5111 is represented by a dotted line, but in fact, the dotted line is absent.

The five blades 512, 513, 514, 515, and 516 respectively extend outwards from the outer periphery 5111 of the body 511, the body 511 and the five blades 512, 513, 514, 515, and 516 are of an integrally formed structure, and the first knife 51 is radial in shape.

The second knife 53 is disposed on the body 511 of the first knife 51. Two ends 531 and 532 of the second knife 53 extend upwards to form two upward blades. In this way, the stirring knife assembly 10 of the present invention is formed with seven blades in total.

In this embodiment, the first knife 51 and the second knife 53 are respectively provided with a through hole 517, 533 for the rotating shaft 33 of the knife shaft 30 to pass therethrough. The rotating shaft 33, which passes through the through holes 517 and 533, is screwed tightly by the nut 35, such that the stirring knife assembly 10 is firmly assembled. However, the first knife 51 and the second knife 53 can also be connected to the rotating shaft 33 in other manners, and are thus not limited to the screwing by means of the nut 35.

In this way, the stirring knife assembly 10 of the present invention can increase the chances of breaking up food in the stirring cup, thereby improving the work efficiency.

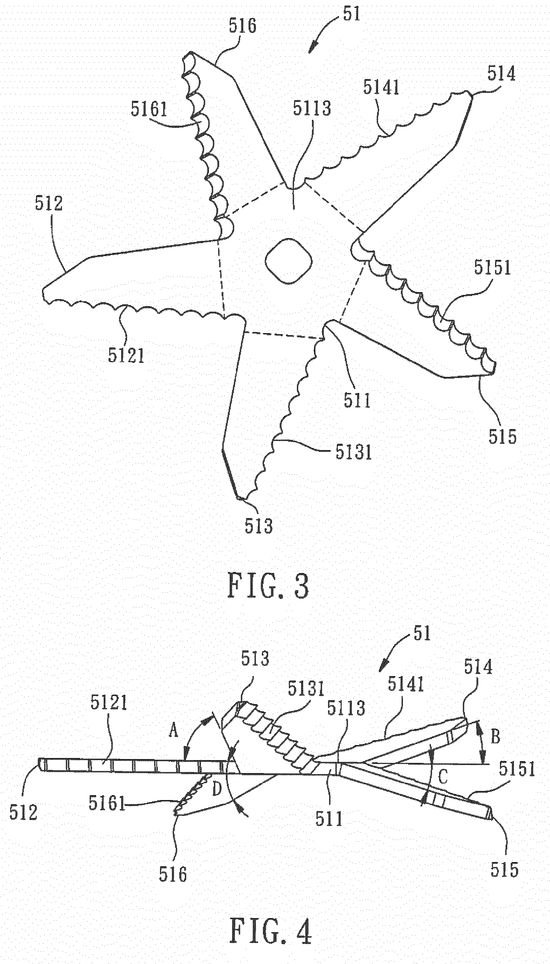

As shown in FIGs. 3 and 4, the five blades of the first knife 51 include a horizontal blade 512, two upwardly inclined blades 513 and 514, and two downwardly inclined blades 515 and 516. The horizontal blade 512 is parallel to a horizontal surface 5113 of the body 511. The two blades adjacent to the horizontal blade 512 are respectively the upwardly inclined blade 513 and the downwardly inclined blade 516. The two upwardly inclined blades 513 and 514 incline upwardly from the horizontal surface 5113 of the body 511. The incline angles A and B of the two upwardly inclined blades 513 and 514 are any one from 10 degrees to 30 degrees. In the present embodiment, the incline angles A and B of the two upwardly inclined blades 513 and 514 are respectively 15 degrees and 20 degrees. The two downwardly inclined blades 515 and 516 incline downwardly from the horizontal surface 5113 of the body 511. The incline angles C and D of the two downwardly inclined blades 515 and 516 are any one from minus 10 degrees to minus 30 degrees. In the present embodiment, the incline angles C and D of the two downwardly inclined blades 515 and 516 are minus 15 degrees.

In the present embodiment, the incline angles A and B of the two upwardly inclined blades 513 and 514 are different, and the incline angles C and D of the two downwardly inclined blades 515 and 516 are the same. However, in fact, the incline angles A and B of the two upwardly inclined blades 513 and 514 may also be the same, and the incline angles C and D of the two downwardly inclined blades 515 and 516 may also be different. Thus, the incline angles A, B, C, and D are not limited to those described in the present embodiment.

The horizontal blade 512, the two upwardly inclined blades 513 and 514, and the two downwardly inclined blades 515 and 516 are respectively provided with a knife edge 5121, 5131, 5141, 5151, or 5161. The knife edges 5121, 5131, 5141, 5151, and 5161 are respectively composed of a plurality of arc-shaped inclined surfaces which can increase the efficiency of breaking up food. The knife edge 5121 of the horizontal blade 512 and the knife edges 5131 and 5141 of the two upwardly inclined blades 513 and 514 face downwards.

In this way, since the first knife 51 is provided with the above-mentioned blades, the horizontal blade 512 can effectively break up the food in the horizontal direction, the two upwardly inclined blades 513 and 514 can effectively break up the food located above the body 511, and the two downwardly inclined blades 515 and 516 can effectively break up the food below the body 511, such that the work efficiency of breaking up food by the stirring knife assembly can be improved.

In practice, the five blades of the first knife may also be in other combinations, for example, a combination of two horizontal blades, two upwardly inclined blades, and a downwardly inclined blade, or the like, and are thus not limited to those described in the present embodiment. The knife edges of the blades may also be arranged in other directions, and are thus not limited to those described in the present embodiment.

In addition, if the five blades are in other combinations, the two blades adjacent to the horizontal blade may also be in other blade configurations, and are thus not limited to those described in the present embodiment.

Finally, it is emphasized again that, the components disclosed by the present invention in the aforementioned embodiments are merely illustrated as examples, and not used to limit the scope of the present application, and substitutions or variations of other equivalent components should also be covered by the claims of the present application.

## Claims

1. A stirring knife assembly (10) adapted to be installed in a stirring cup, comprising a knife shaft (30) and a knife assembly (50), the knife assembly (50) connected to the knife shaft (30), the stirring knife assembly (10) being **characterized in that**:
the knife assembly (50) comprising a first knife (51) and a second knife (53), wherein the first knife (51) has a body (511) and five blades (512, 513, 514, 515, 516), the body (511) has an outer periphery and a horizontal surface defined by the outer periphery, the five blades (512, 513, 514, 515, 516) respectively extend outwards from the outer periphery of the body (511), and the second knife (53) is disposed on the body (511) of the first knife (51).

2. The stirring knife assembly (10) of claim 1, wherein the five blades (512, 513, 514, 515, 516) of the first knife (51) comprise a horizontal blade (512), two upwardly inclined blades (513,514), and two downwardly inclined blades (515,516), the horizontal blade (512) being parallel to the horizontal surface of the body (511), the two upwardly inclined blades (513,514) inclining upwardly from the horizontal surface of the body (511), and the two downwardly inclined blades (515,516) inclining downwardly from the horizontal surface of the body (511).

3. The stirring knife assembly (10) of claim 2, wherein the horizontal blade (512), the two upwardly inclined blades (513,514), and the two downwardly inclined blades (515,516) are respectively provided with a knife edge, the knife edge (5121) of the horizontal blade (512) and the knife edges (5131,5141) of the two upwardly inclined blades (513,514) facing downwards, and the knife edges (5151,5161) of the two downwardly inclined blades (515,516) facing upwards.

4. The stirring knife assembly (10) of claim 2, wherein the two blades adjacent to the horizontal blade (512) are respectively one of the upwardly inclined blades (513,514) and one of the downwardly inclined blades (515,516).

5. The stirring knife assembly (10) of claim 2, wherein incline angles (A,B) of the two upwardly inclined blades (513,514) are in a range from 10 degrees to 30 degrees respectively, and incline angles (C,D) of the two downwardly inclined blades (515,516) are in a range from minus 10 degrees to minus 30 degrees.

6. The stirring knife assembly (10) of claim 5, wherein the incline angles (A,B) of the two upwardly inclined blades (513,514) are respectively 15 degrees and 20 degrees, and the incline angles (C,D) of the two downwardly inclined blades (515,516) are respectively minus 15 degrees.

7. The stirring knife assembly (10) of claim 1, wherein two ends (531,532) of the second knife (53) extend upwards.
